# DEMANDE DE BREVET EUROPEEN

(11) **EP 2 662 227 A1**
(43) Date de publication de la demande: **13.11.2013**
(21) Numéro de dépôt: 13002428.4
(22) Date de dépôt: 07.05.2013
(51) Int. Cl.: B60C 11/03

(54) **Pneumatique et roue pour cycle**

(30) Priorité: 11.05.2012 FR 1201381
(71) Demandeur: MAVIC S.A.S., 74370 Metz-Tessy (FR)
(72) Inventeur: Mercat, Jean-Pierre, 74650 Chavanod (FR); Cretoux, Brieuc, 74600 Seynod (FR); Huat, François Xavier, 74000 Annecy (FR)
(74) Mandataire: Rambaud, Pascal

(57) **Abrégé**

Pneumatique (5) pour roue de cycle présentant une surface extérieure annulaire (S7) comportant :
- une première zone (Z1) lisse,
- une deuxième zone (Z2) comprenant deux bandes annulaires intermédiaires (72b, 72'b) s'étendant de part et d'autre de la première zone (Z1) et présentant chacune des aspérités (74, 76),
- une troisième zone (Z3) comprenant deux bandes annulaires latérales lisses (72c, 72'c) s'étendant chacune le long de l'une des bandes intermédiaires (72b, 72'b). Au niveau du bord latéral (B32, B'32) de chaque bande latérale (72c, 72'c), une variation de l'épaisseur du pneumatique (5) est inférieure ou égale à 0, 2 mm.

## Description

La présente invention concerne un pneumatique pour roue de cycle ainsi qu'une roue pour cycle comportant un tel pneumatique.

La puissance mécanique que peut développer l'être humain est limitée. En particulier, la vitesse d'avance d'un cycle, par exemple un vélo, est limitée par la puissance que peut développer le cycliste. Cette vitesse d'avance est dégradée par des forces de résistance à l'avancement, qui comprennent notamment la résistance au roulement, qui est une fonction linéaire de la vitesse, et la résistance aérodynamique ou trainée, qui est fonction de la vitesse au carré. La théorie de l'aérodynamique enseigne que plus l'écoulement de l'air, autour d'un objet en déplacement, est laminaire, plus sa résistance aérodynamique sera faible. A l'inverse, lorsqu'un objet en déplacement présente une géométrie qui génère un décollement des filets d'air qui longent sa surface, son avance provoque la formation de tourbillons qui tendent à augmenter la trainée, et diminuent par conséquent la vitesse d'avance de cet objet. D'autre part, dans certains cas, un écoulement laminaire peut prendre place au dessus d'une couche limite.

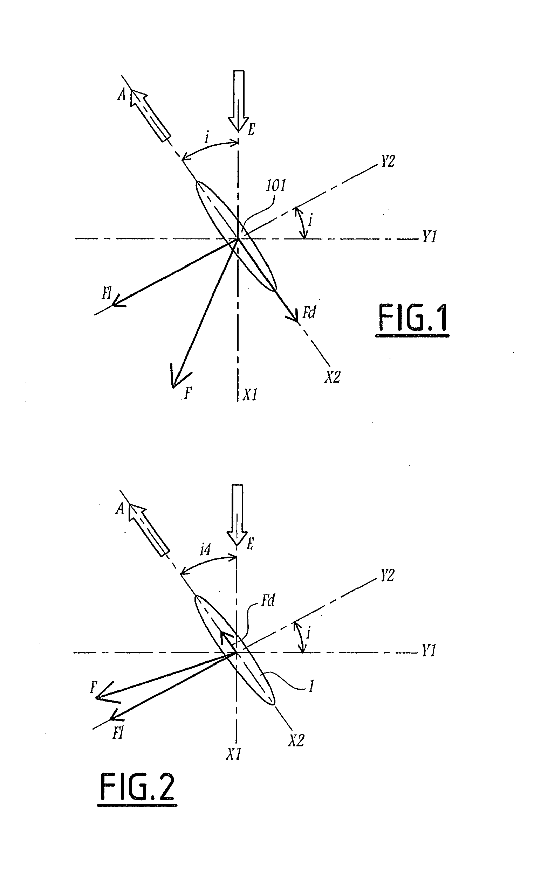

La figure 1 montre, en vue de dessus, une roue de cycle 101 de l'art antérieur, ayant une direction d'avancement A. La roue 101 est soumise à un écoulement d'air E. La direction de l'écoulement E est séparée angulairement de la direction d'avancement A par un angle d'incidence i. Cette figure correspond à une situation où le vent apparent, ressenti par le cycliste, n'est pas dans la direction d'avancement.

Deux axes perpendiculaires X1 et Y1 forment un premier repère lié à l'écoulement E, la direction de l'écoulement E étant centrée sur l'axe X1. Deux autres axes perpendiculaires X2 et Y2 forment un second repère lié à la roue 101, la direction d'avancement A et la roue 101 étant centrées sur l'axe X2. Les axes X1 et X2, ainsi que les axes Y1 et Y2, sont donc séparés angulairement par l'angle d'incidence i.

On note F, l'effort résultant de l'écoulement E, appliqué à la roue 101. Dans le repère de la roue 101, on note Fd la projection de l'effort F sur l'axe X2 et on note Fℓ, la projection de l'effort F sur l'axe Y2. Fd correspond à la trainée et Fℓ à un effort latéral, appliqués chacun à la roue 101. La trainée Fd a une direction opposée à celle de l'avancement A du cycle, elle s'oppose donc au déplacement du cycle. Par conséquent, l'écoulement d'air E freine l'avance du cycle, ce qui est désavantageux pour le cycliste.

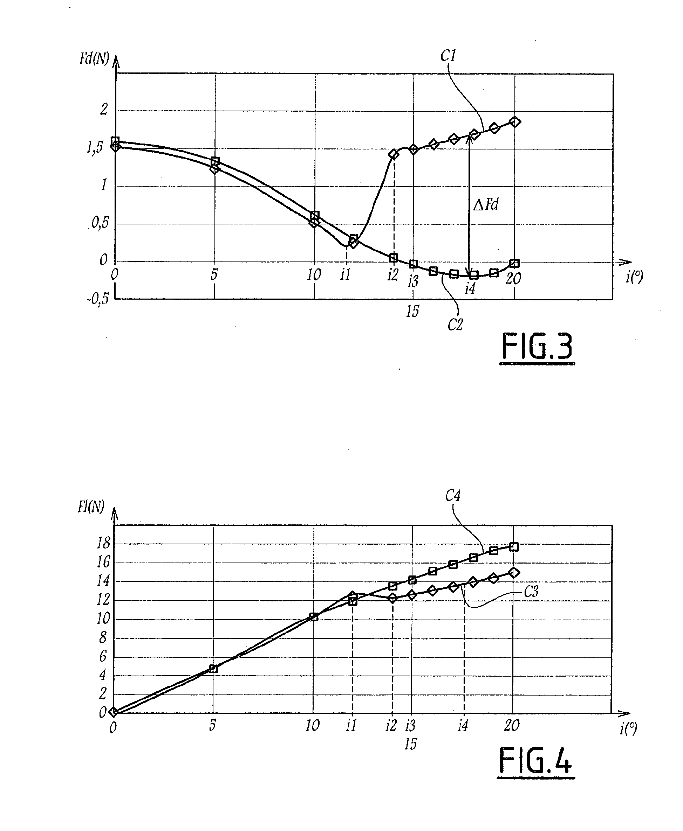

La courbe C1 à la figure 3 montre, pour la roue 101 de l'art antérieur, l'intensité de la trainée Fd, exprimée en N, en fonction de l'angle d'incidence i, exprimé en degrés. Lorsque l'angle d'incidence i varie de 0 à une première valeur limite i1 environ égale à 12°, la trainée Fd diminue. Puis, l'écoulement E décroche et la trainée Fd augmente rapidement jusqu'à ce que l'angle d'incidence i atteigne une seconde valeur limite i2, environ égale à 14°. Lorsque l'angle d'incidence i dépasse la deuxième valeur limite i2, la trainée Fd augmente avec une pente plus progressive.

La courbe C3 à la figure 4 montre l'intensité de l'effort latéral Fℓ, exprimé en N, en fonction de l'angle d'incidence i, exprimé en degrés. Lorsque l'angle d'incidence i varie de 0 à la valeur de décrochage i1, l'effort latéral Fℓ augmente. Puis, l'effort latéral Fℓ diminue légèrement jusqu'à ce que l'angle d'incidence i atteigne la seconde valeur limite i2. Lorsque l'angle d'incidence i dépasse la seconde valeur limite i2, l'effort latéral Fℓ augmente de manière progressive.

Lorsque l'angle d'incidence i atteint la valeur de décrochage i1, l'écoulement E se décolle du profil de la roue 101 et crée des turbulences qui augmentent la trainée Fd et dégradent les performances du cycliste. Ceci est particulièrement désavantageux, car lors de l'utilisation du cycle, l'angle d'incidence i varie en fonction de paramètres ne pouvant pas être maitrisés, tels que la direction du vent. L'angle d'incidence i varie également en fonction de l'environnement du cycliste. Par exemple, lorsque le cycliste passe à proximité d'obstacles tels que des bâtiments, la direction et l'intensité de l'écoulement E n'est pas la même que lorsqu'aucun obstacle ne se trouve à proximité.

Les variations brusques de l'intensité et de la direction de la trainée Fd et de l'effort latéral Fℓ entrainent des difficultés de pilotage du cycle, car ces efforts Fd et Fℓ génèrent des variations brusques de moments dans la colonne de direction et sont ressentis par le cycliste, au niveau du guidon.

EP-A-2 374 634 divulgue une jante pour roue de cycle qui comporte des crochets de fixation d'un pneumatique à tringle. Les bords de ces crochets ont un profil dentelé, afin de réduire la trainée aérodynamique. EP-A-2 374 634 ne prévoit pas de moyens permettant de réduire la trainée aérodynamique générée par le pneumatique. Or, le pneumatique est l'élément de la roue d'un cycle qui est en contact en premier avec l'écoulement d'air. Le pneumatique a donc une grande influence sur la trainée. Ainsi, lorsqu'une telle roue est soumise à un écoulement d'air, des tourbillons se créent le long de la surface du pneumatique. Cela tend à diminuer la vitesse d'avance du cycle et entraine des difficultés de pilotage, comme expliqué plus haut.

C'est à ces inconvénients qu'entend plus particulièrement remédier l'invention en proposant un pneumatique pour roue de cycle dont la résistance aérodynamique est réduite.

A cet effet, l'invention concerne un pneumatique pour roue de cycle, présentant une surface extérieure annulaire tournée à l'opposé d'un axe de rotation de la roue et comportant une première zone comprenant une bande annulaire centrale lisse s'étendant de part et d'autre d'un sommet du pneumatique confondu avec un plan médian du pneumatique. Selon l'invention :
- dans une section radiale du pneumatique, un premier angle mesuré entre le plan médian et l'un ou l'autre des bords annulaires de la première zone, est compris entre 10° et 20°, de préférence entre 12° et 17°,
- le pneumatique comporte, en outre, une deuxième zone comprenant deux bandes annulaires intermédiaires s'étendant de part et d'autre de la première zone et présentant chacune des aspérités définissant une surface supérieure pouvant venir en contact avec le sol lors de l'utilisation du pneumatique, et une surface inférieure, la somme des surfaces inférieures de la deuxième zone étant supérieure ou égale à 40% de la surface totale de la deuxième zone, chaque bande intermédiaire étant délimitée par un bord central annulaire adjacent à la première zone et par un bord latéral annulaire et externe opposé au bord central annulaire,
- dans une section radiale du pneumatique, un deuxième angle, mesuré entre le plan médian et le bord latéral annulaire et externe de chaque bande intermédiaire, est compris entre 50° et 80°, de préférence entre 55° et 75°,
- le pneumatique comporte, en outre, une troisième zone comprenant deux bandes annulaires latérales lisses s'étendant chacune le long du bord latéral de l'une des bandes intermédiaire, la troisième zone étant délimitée par un bord central annulaire adjacent au bord latéral et externe de l'une des bandes intermédiaire et par un bord latéral annulaire et externe opposé au bord central annulaire de la bande latérale,
- dans une section radiale du pneumatique, un troisième angle, mesuré entre le plan médian et l'un ou l'autre bord latéral et externe de la troisième zone, est compris entre 80° et 100°, de préférence entre 85° et 95°, et
- une variation maximale locale de l'épaisseur du pneumatique, au niveau du bord latéral et externe de chaque bande latérale lisse de la troisième zone, est inférieure ou égale à 0, 2 mm.

Grâce à l'invention, lorsqu'une roue équipée d'un tel pneumatique est soumise à un écoulement d'air, l'action conjuguée des trois zones du pneumatique retarde le décrochage de l'écoulement d'air, lorsque l'angle d'incidence augmente. De plus, l'effort latéral généré par l'écoulement d'air varie de manière progressive en fonction de l'angle d'incidence. Ainsi, les performances du cycliste ne sont pas pénalisées et le pilotage du cycle est facilité, en particulier lorsque l'angle d'incidence i atteint et dépasse une valeur proche du décrochage des pneumatiques de l'art antérieur, notamment une valeur d'environ 12° à 15°.

Selon des aspects avantageux mais non obligatoires de l'invention, un tel pneumatique peut incorporer une ou plusieurs des caractéristiques suivantes, prises dans toute combinaison techniquement admissible :
- La deuxième zone comporte des zones lisses connexes qui ont toutes une surface comprise entre 5 mm² et 50 mm², de préférence comprise entre 8 mm² et 30 mm².
- Une variation maximale globale d'épaisseur entre l'épaisseur maximale et l'épaisseur minimale du pneumatique est comprise entre 1 mm et 2 mm.
- La hauteur des aspérités de la deuxième zone est supérieure à 0,2 mm, de préférence supérieure à 0,3 mm.
- Les aspérités de la deuxième zone comprennent des picots et/ou des entailles.
- La deuxième zone est divisée en des premières et secondes parties adjacentes réparties de manière alternée le long de la circonférence du pneumatique, en ce que les premières parties comportent un premier type d'aspérités et en ce que les secondes parties comportent un deuxième type d'aspérités.
- Les premières parties de la deuxième zone comportent des picots et en ce que les secondes parties de la deuxième zone comportent des entailles.
- Les picots sont disposés selon des lignes parallèles qui, à l'état dégonflé et mis à plat du pneumatique, forment un angle compris entre 30° et 50° avec le sommet du pneumatique.
- A l'état dégonflé et mis à plat du pneumatique, les entailles sont parallèles et forment un angle compris entre 30° et 50° avec le sommet du pneumatique.
- Le diamètre du pneumatique lorsqu'il est gonflé est compris entre 20 et 25 mm.

L'invention a également pour objet une roue de cycle comprenant un tel pneumatique.

L'invention sera mieux comprise et d'autres avantages de celle-ci apparaîtront plus clairement à la lumière de la description qui va suivre d'une roue pour cycle et d'un pneumatique conformes à l'invention, donnée uniquement à titre d'exemple et faite en référence aux dessins dans lesquels :
- la figure 1 est une vue de dessus d'une roue de cycle de l'art antérieur ;
- la figure 2 est une vue de dessus d'une roue de cycle conforme à l'invention dans le cas particulier d'un angle d'incidence proche de 18° ;
- la figure 3 est un graphique représentant la trainée aérodynamique en fonction de l'angle d'incidence, pour une roue équipée d'un pneumatique de l'art antérieur et pour une roue équipée d'un pneumatique conforme à l'invention ;
- la figure 4 est un graphique représentant l'effort latéral en fonction de l'angle d'incidence, pour la roue de l'art antérieur et pour la roue conforme à l'invention ;
- la figure 5 est une vue en perspective de la roue de la figure 2 ;
- les figures 6, 7 et 8 sont des vues partielles, respectivement en perspective, latérale et de dessus, d'un pneumatique faisant partie de la roue de la figure 2, à l'état dégonflé et mis à plat ;
- la figure 9 est une vue de dessus du pneumatique de la figure 2 à l'état dégonflé et mis à plat ;
- la figure 10 est une coupe radiale du pneumatique des figures 6 à 9 ;
- la figure 11 est une coupe radiale du pneumatique des figures 6 à 10, à l'état dégonflé et mis à plat ;
- la figure 12 est une vue, à plus grande échelle, du détail XII-XII à la figure 11 ; et
- la figure 13 est une vue, à plus grande échelle, correspondant au détail XIII-XIII à la figure 12, pour une variante de l'invention.

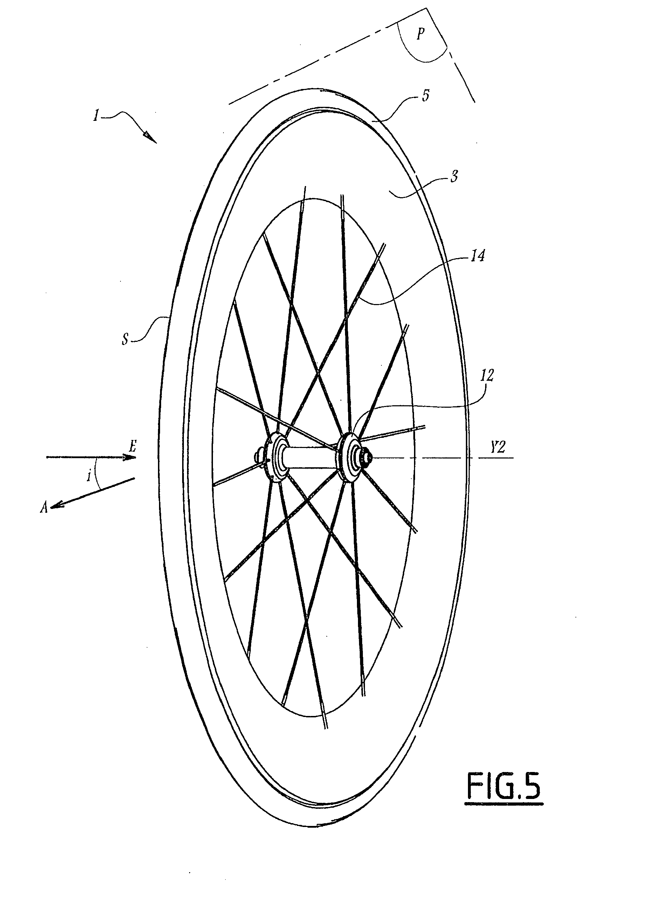

La figure 5 montre une roue 1 destinée à équiper un cycle non représenté, par exemple un vélo ou un autre type de cycle. Lors de son utilisation, la roue 1 est mobile en rotation autour d'un axe Y2. La roue 1 est une roue à rayons, mais l'invention peut s'appliquer à d'autres types de roues. La roue 1 comprend une jante 3, un pneumatique 5, un moyeu 12 et des rayons 14 qui relient la jante 3 au moyeu 12. L'axe Y2 est un axe de révolution pour la jante 3 et le pneumatique 5.

Dans la suite de la description, on qualifie d'extérieures les surfaces qui font face à l'extérieur de la roue 1. On appelle sommet S du pneumatique 5, une zone circulaire périphérique extérieure du pneumatique 5 qui est en contact avec le sol lors de l'utilisation de la roue 1. On note P, un plan médian de la roue 1, perpendiculaire à l'axe Y2 et passant par le sommet S du pneumatique 5.

On note A, une direction d'avancement de la roue 1, perpendiculaire à l'axe Y2 et contenue dans le plan P. Lorsque la roue 1 avance selon la direction d'avancement A, la roue 1 est soumise à un écoulement d'air E.

Le pneumatique 5 est de type boyau, c'est-à-dire que sa section radiale forme un contour fermé sur lui-même. Lorsque le pneumatique 5 est gonflé, il présente une géométrie sensiblement toroïdale et sa section radiale est à peu près circulaire, compte tenu des variations de son épaisseur e. L'épaisseur e du pneumatique 5 est mesurée dans une section radiale du pneumatique 5, selon une direction radiale. Dans le plan médian P, au niveau du sommet S, l'épaisseur e est égale à une épaisseur maximale emax comprise entre 2,5 mm et 3,5 mm, de préférence de l'ordre de 3 mm. Perpendiculairement au plan P, au niveau de « l'équateur » du pneumatique 5, l'épaisseur e est égale à une épaisseur minimale emin comprise entre 1 mm et 2 mm, de préférence de l'ordre de 1,5 mm. De préférence, la variation globale d'épaisseur Δe1 entre l'épaisseur maximale emax et l'épaisseur minimale emin du pneumatique 5 est comprise entre 1 mm et 2 mm. La différence globale d'épaisseur est considérée pour toute la section radiale du pneumatique. De cette manière, en section radiale, la forme extérieure de la moitié externe du pneumatique est légèrement elliptique, ce qui contribue à empêcher le décrochage de l'écoulement E.

Le pneumatique 5 comprend un socle 6, une bande de roulement 7 et deux flancs latéraux 8 qui sont situés de part et d'autre de la bande de roulement 7 et qui relient le socle 6 à la bande de roulement 7. Le socle 6 est collé sur la jante 3. La bande de roulement 7 est située de part et d'autre du sommet S du pneumatique 5, et présente une surface extérieure S7 qui comprend trois zones annulaires circonférentielles Z1, Z2 et Z3.

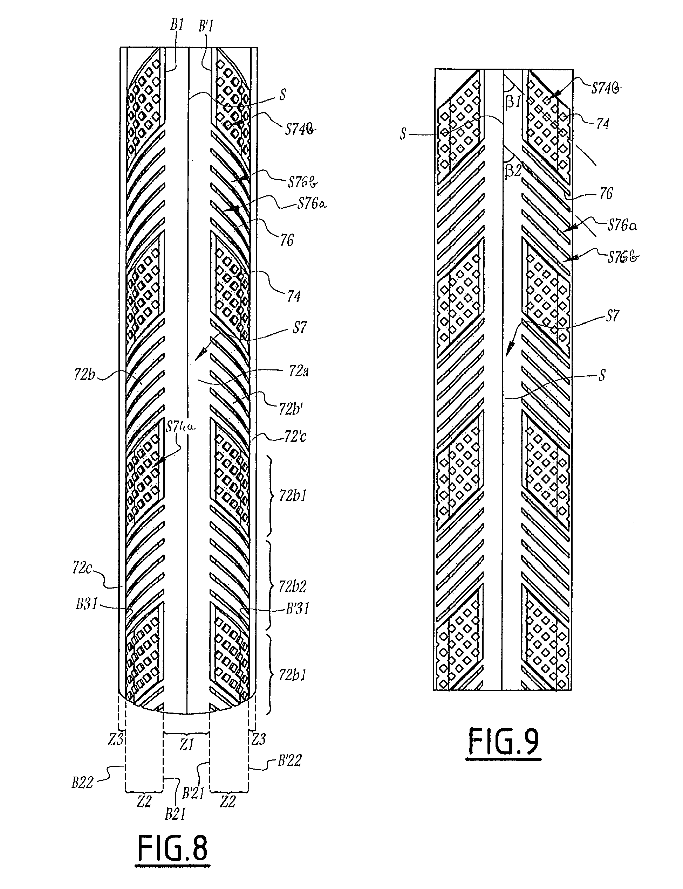

La première zone Z1 comprend une bande centrale annulaire lisse 72a, délimitée par deux bords annulaires B1 et B'1, représentés en pointillés à la figure 8 uniquement. La bande centrale 72a est en une seule partie centrée sur le plan médian P et s'étendant de part et d'autre du sommet S du pneumatique 5.

La deuxième zone Z2 est bipartite et comprend deux bandes annulaires intermédiaires 72b et 72'b s'étendant de part et d'autre de la première zone Z1. Chaque bande intermédiaire 72b et 72'b est délimitée par un bord central annulaire B21 ou B'21 adjacent à la première zone Z1, ainsi que par un bord latéral annulaire et externe B22 ou B'22 opposé au bord central B21 ou B'21. Le bord central B21 et B'21 de chaque bande rugueuse 72b et 72'b est confondu avec l'un des bords B1 ou B'1 de la première zone Z1. Autrement dit, les zones Z1 et Z2 se touchent.

Les bandes annulaires 72b et 72'b sont rugueuses, c'est-à-dire qu'elles présentent des reliefs ou aspérités 74 et 76. Chaque bande rugueuse 72b et 72'b est divisée en plusieurs premières et secondes parties adjacentes 72b1 et 72b2 réparties de manière alternée le long de la circonférence du pneumatique 5. Les parties 72b1 et 72b2 sont trapézoïdales et les surfaces totales de chaque partie 72b1 et 72b2 sont environ respectivement comprises entre 100 mm² et 115 mm², et 115 mm² et 130 mm². Dans le mode de réalisation décrit ici, les surfaces de chaque partie 72b1 et 72b2 sont respectivement égales à 108 mm² et 126 mm²

Chaque première partie 72b1 de la deuxième zone Z2 comporte un premier type d'aspérité, à savoir des picots 74 de forme carrée. Au niveau de chaque première partie 72b1, les picots 74 sont disposés selon quatre lignes de cinq picots 74.

Le choix du nombre de lignes de picots 74, et le choix du nombre de picots par ligne, dans chaque première partie 72b1 de la deuxième zone Z2, ne sont bien entendu pas limitatifs et on pourra envisager d'en placer un peu moins, en les espaçant, ou un peu plus, en agrandissant par exemple la longueur de la première partie 72b1 de la zone Z2.

Comme visible à la figure 9, lorsque le pneumatique 5 est à l'état dégonflé et mis à plat, le sommet S du pneumatique 5 est rectiligne et la surface extérieure S7 est sensiblement plane. Chaque ligne de picots 74 forme alors un angle β1 compris entre 30° et 50°, de préférence environ égal à 45°, avec le sommet S du pneumatique 5.

Chaque seconde partie 72b2 de la deuxième zone Z2 présente un deuxième type d'aspérités en creux, à savoir des entailles rectilignes 76. Le fond de chaque entaille 76 est globalement plat et est défini par une surface inférieure S76a. Les entailles 76 sont séparées entre elles par des surfaces supérieures S76b qui définissent des nervures situées entre les entailles 76 pouvant venir en contact avec le sol lors de l'utilisation de la roue 1 et dont la normale est orientée globalement radialement, à l'opposé de l'axe de rotation Y2.

Chaque seconde partie 72b2 comporte six entailles 76. Le choix du nombre de six entailles dans chaque seconde partie 72b2 de la deuxième zone Z2 n'est bien entendu pas limitatif et on pourra envisager d'en placer un peu moins, en les espaçant, ou un peu plus, en agrandissant par exemple la longueur de la seconde partie 72b2 de la zone Z2.

Lorsque le pneumatique 5 est dégonflé et mis à plat, chaque entaille 76 forme un angle β2 compris entre 30° et 50°, de préférence environ égal à 45°, avec le sommet S du pneumatique. Ainsi, les entailles 76 s'étendent parallèlement aux lignes formées par les picots 74. En alternative, les angles β1 et β2 sont différents. On pourra également envisager que les entailles aient une forme non rectiligne mais courbe.

Chaque entaille 76 et chaque ligne de picots 74 de la bande annulaire 72b forme sensiblement, avec une entaille et une ligne de picots 74 de l'autre bande annulaire 72b, un chevron ou un « V » qui n'a pas de pointe puisque la zone Z1 est lisse. Chaque chevron, considéré artificiellement avec une pointe, pointe dans le sens de rotation de la roue 1.

Les picots 74 font saillie à partir d'une surface inférieure S74a de la première partie 72b1 de la deuxième zone Z2, s'étendant entres les picots 74. Les picots 74 présentent chacun une surface supérieure plane S74b qui peut venir en contact avec le sol lors de l'utilisation de la roue 1 et dont la normale est orientée globalement radialement, à l'opposé de l'axe de rotation Y2.

Selon une direction radiale du pneumatique 5, passant par l'axe de rotation Y2, les surfaces inférieures S74a et S76a sont plus proches de l'axe de rotation Y2 que les surfaces supérieures S74b et S76b.

La somme des surfaces inférieures S74a et S74b est supérieure ou égale à 40% de la superficie totale de la deuxième zone Z2. La superficie totale de la deuxième zone Z2 est globalement égale au périmètre du pneumatique 5, multiplié par la somme des largeurs de chaque bande rugueuse 72b et 72'b.

La hauteur H des aspérités 74 et 76, mesurée entre leur surface supérieure S74b ou S76b et la surface inférieure S74a ou S76a, est supérieure à 0,2 mm, de préférence supérieure à 0,3 mm. La hauteur H des aspérités est inférieure à 0,7 mm, de préférence inférieure à 0,6 mm.

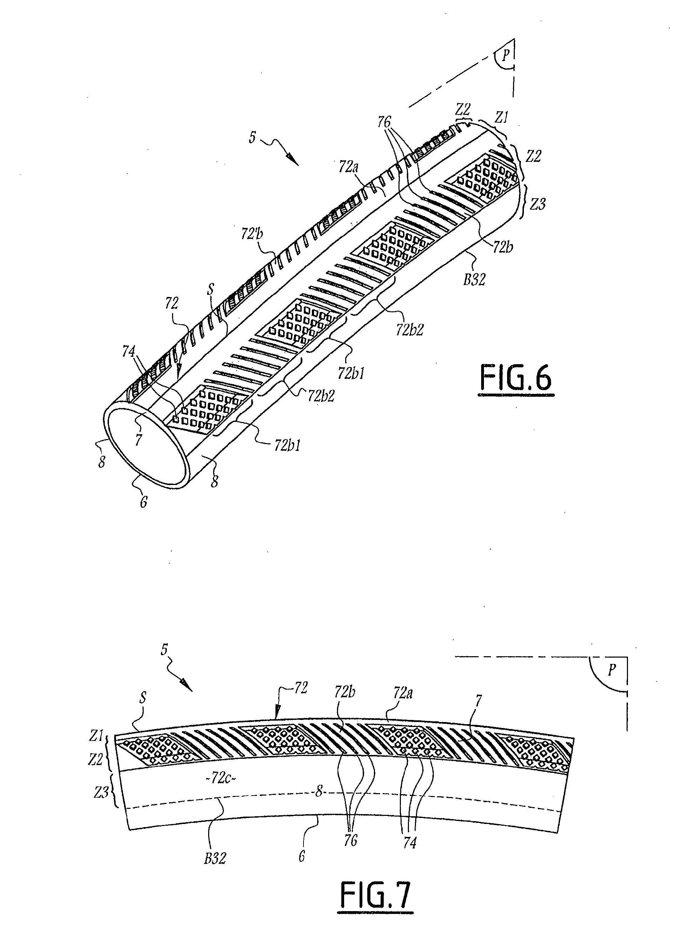

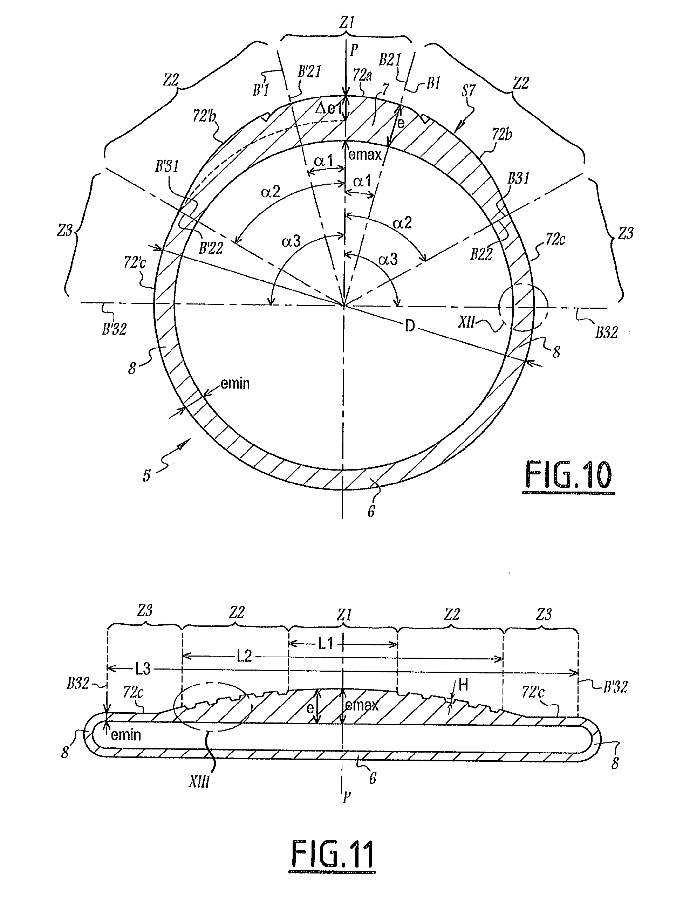

Dans l'exemple représenté sur les figures 5 à 12, pour le pneumatique à l'état dégonflé et mis à plat, les surfaces inférieures S74a et S76a est plane.

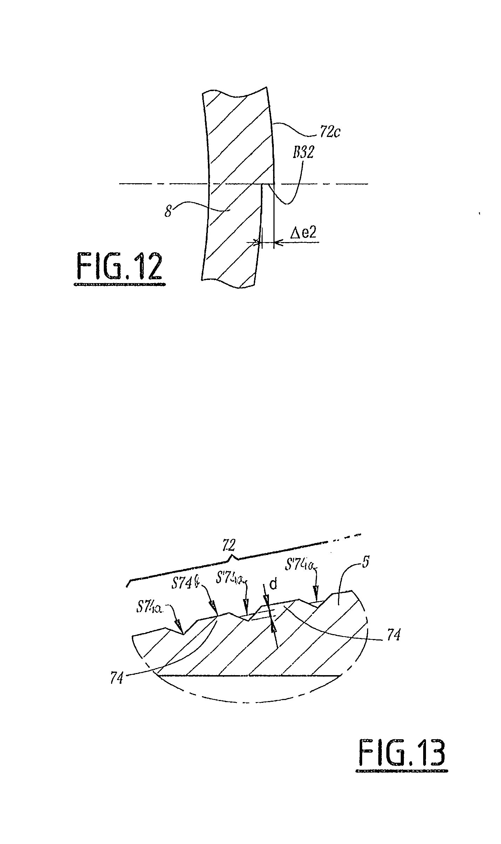

Dans l'alternative de la figure 13, la surface inférieure S74a forme des angles, c'est-à-dire des rainures dont le fond est pointu, entre les picots 74, de sorte que l'aire de la surface inférieure S74a est nulle. Dans ce cas, pour le pneumatique à l'état dégonflé et mis à plat, on considère artificiellement que la surface inférieure S74a a une aire identique à une surface virtuelle S'74a plane, située entre les picots 74 et à une distance d, égale à 0,1 mm, au dessus du fond des angles formés par la surface inférieure réelleS74a. Le même principe s'applique aux rainures 76, pour la surface inférieure S76a, dans le cas où le fond des rainures 76 n'est pas plat mais forme un angle.

La seconde partie 72b2 de la deuxième zone Z2 comprend des zones lisses connexes placées entre les entailles 76, c'est-à-dire des zones lisses qui sont d'un seul tenant. La superficie de chacune de ces zones lisses connexe est comprise entre 5 mm² et 50 mm², de préférence comprise entre 8 mm² et 30 mm². Ces zones lisses connexes sont ici de type parallélogramme et leur largeur est comprise entre 1,7 mm et 10 mm.

La troisième zone Z3 est bipartite et comprend deux bandes annulaires latérales lisses 72c et 72'c s'étendant de part et d'autre de la deuxième zone Z2, à l'opposé de la première zone Z1. Chaque bande latérale 72c et 72'c est délimitée par un bord central annulaire B31 ou B'31 adjacent à la deuxième zone Z2, ainsi que par un bord latéral et externe annulaire B32 ou B'32 opposé au bord central B31 ou B'31. Le bord central B31 ou B'31 de chaque bande latérale 72c et 72'c est confondu avec l'un des bords B21 ou B'21 de la deuxième zone Z2. Autrement dit, les zones Z2 et Z3 se touchent.

Comme visible à la figure 12, la variation maximale locale Δe2 de l'épaisseur e, au niveau du bord latéral B32 ou B'32 de la troisième zone Z3, est inférieure ou égale à 0,2 mm. La variation maximale locale Δe2 est la différence entre l'épaisseur e, mesurée d'un premier côté du bord latéral B32 ou B'32, et l'épaisseur e, mesurée de l'autre côté de ce bord latéral B32 ou B'32. La variation Δe2 est mesurée le long d'une zone s'étendant, le long de la circonférence du pneumatique, sur une longueur de 1 mm. Ainsi, la jonction entre la troisième zone Z3 et les flancs 8 ne comporte pas d'arête vive, ce qui contribue à empêcher le décrochage de l'écoulement E.

De la même manière, les zones Z1 et Z3 présentent une variation maximale de l'épaisseur e, mesurée sur une zone circonférentielle ayant une longueur de 1 mm, inférieure ou égale à 0,2 mm.

Les zones Z1 et Z3 sont lisses mais en pratique, les zones Z1 et Z3 peuvent présenter des aspérités dont la profondeur maximale est de préférence inférieure à 0,05 mm. Le caractère lisse des zones Z1 et Z3 peut également se définir par la rugosité Rₐ, qui est l'écart moyen arithmétique ou le critère statistique de rugosité. Plus précisément, la rugosité Rₐ est la moyenne arithmétique, sur une longueur de base, de toutes les distances entre la ligne moyenne de la surface réelle de la zone Z1 ou Z3, et la surface réelle de la zone Z1 ou Z3. De préférence, la rugosité Rₐ est inférieure à 0,05 mm.

A l'état gonflé du pneumatique 5, on note α1, un premier angle mesuré entre le plan médian P et l'un ou l'autre des bords B1 ou B'1 de la première Z1. L'angle α1 est compris entre 10° et 20°. De préférence, l'angle α1 est compris entre 12° et 17°, de préférence encore de l'ordre de 15°.

On note α2, un deuxième angle mesuré entre le plan médian P et le bord latéral B22 ou B'22 de l'une ou l'autre des bandes rugueuses 72b et 72'b de la deuxième zone Z2. L'angle α2 est compris entre 50° et 80°. De préférence, l'angle α2 est compris entre 55° et 75°, de préférence encore de l'ordre de 60°.

On note α3, un troisième angle mesuré entre le plan médian P et le bord latéral B32 ou B'32 de l'une ou l'autre des bandes latérales 72c ou 72'c. L'angle α3 est compris entre 80° et 100°. De préférence, l'angle α3 est compris entre 85° et 95°, de préférence encore de l'ordre de 90°.

On note D, le diamètre extérieur du pneumatique 5, mesuré dans une section radiale du pneumatique 5 et perpendiculairement au plan P.

Lorsque le pneumatique 5 est dégonflé et mis à plat, on note L1, une largeur de la première zone Z1, mesurée perpendiculairement au plan médian P, entre les bords B1 et B'1 de la première zone Z1. On note L2, une largeur de la deuxième zone Z2, mesurée perpendiculairement au plan médian P, entre les bords latéraux B22 et B'22 de la deuxième zone Z2. On note L3, une largeur de la troisième zone Z3, mesurée perpendiculairement au plan médian P, entre les bords latéraux B32 et B'32 de la troisième zone Z3.

Ces valeurs L1, L2 et L3 peuvent être respectivement choisies dans les plages suivantes : 2 à 3,5 mm, 2,5 à 14 mm et 10 à 20 mm.

Dans l'exemple représenté sur les figures, le diamètre D est égal à 20 mm, la largeur L1 est égale à 2,6 mm, la largeur L2 est égale à 10,5 mm et la largeur L3 est égale à 15,5 mm.

En variante, le diamètre D du pneumatique 5 n'est pas égal à 20 mm. Par exemple, il peut être égal à 23 mm ou 25 mm. De préférence, le diamètre D est compris entre 20 mm et 25 mm. La trainée aérodynamique étant proportionnelle à la surface frontale de la roue, laquelle est directement liée au diamètre du pneumatique, on choisira des diamètres inférieurs à 25 mm. Pour calculer les largeurs L1, L2 et L3 en fonction du diamètre D du pneumatique, on peut utiliser trois rapports R1, R2 et R3. Le premier rapport R1 a comme numérateur la largeur L1 et comme dénominateur le diamètre D (R1=L1/D). Le deuxième rapport R2 a comme numérateur la largeur L2 et comme dénominateur le diamètre D (R2=L2/D). Le troisième rapport R3 a comme numérateur la largeur L3 et comme dénominateur le diamètre D (R3=L3/D).

Le premier rapport R1 est égal à environ 13%. De préférence, le premier rapport R1 est compris entre 10% et 15% Le deuxième rapport R2 est égal environ 52%. De préférence, le deuxième rapport R2 est compris entre 45% et 60%. Le troisième rapport R3 est égal environ 78%. De préférence, le premier rapport R1 est compris entre 70% et 90%.

La figure 2 montre, en vue de dessus, la roue 1, soumise à l'écoulement E. La direction de l'écoulement E est séparée angulairement de la direction d'avancement A par un angle d'incidence i, qui est égal sur cette figure à une valeur limite i4 environ égale à 18°.

Deux axes perpendiculaires X1 et Y1 forment un premier repère lié à l'écoulement E, la direction de l'écoulement E étant centrée sur l'axe X1. Deux autres axes perpendiculaires X2 et Y2 forment un second repère lié à la roue 1, la direction d'avancement A et la roue 1 étant centrées sur l'axe X2. Les axes X1 et X2, ainsi que les axes Y1 et Y2, sont donc séparés angulairement par l'angle d'incidence i.

On note F, la résultante des efforts de l'écoulement E appliqués à la roue 101. Dans le repère de la roue 1, on note Fd la projection de l'effort F sur l'axe X2 et on note Fℓ la projection de l'effort F sur l'axe Y2. Fd correspond à la trainée aérodynamique et Fℓ à un effort latéral, appliqués chacun à la roue 1. Lorsque l'angle d'incidence i est égal à la valeur limite i4, qui est la valeur de décrochage, la trainée Fd a la même direction que l'avancement A du cycle, elle contribue donc à l'avance du cycle, ce qui est avantageux pour le cycliste. Autrement dit, dans le repère de la roue, on observe une poussée plutôt qu'une trainée.

La courbe C2 à la figure 3 montre, pour la roue 1, l'intensité de la trainée Fd, exprimée en N, en fonction de l'angle d'incidence i, exprimé en degrés. Lorsque l'angle d'incidence i varie de 0 à une valeur limite i3 environ égale à 15°, la trainée Fd diminue jusqu'à s'annuler. Puis, la trainée Fd devient négative, c'est-à-dire que sa direction est alors la même que la direction d'avancement A. Lorsque l'angle d'incidence i dépasse la valeur de décrochage i4, la trainée Fd augmente progressivement, avec une pente relativement faible, inférieure à la pente de la courbe C1 entre les angles i1 et i2.

La courbe C4 à la figure 4 montre, pour la roue 1, l'intensité de l'effort latéral Fℓ, exprimé en N, en fonction de l'angle d'incidence i, exprimé en degrés. Lorsque l'angle d'incidence i varie de 0 à 20°, l'effort latéral Fℓ augmente progressivement, de manière régulière.

En comparant les courbes C1 et C2, on mesure un écart de trainée maximal ΔFd d'environ 1,7N entre la roue 101 de l'art antérieur et la roue 1 équipée du pneumatique 5 selon l'invention, lorsque l'angle d'incidence i est égal à la valeur de décrochage i4. Cela se traduit par un gain de puissance d'environ une vingtaine de Watt à 50km/h pour le pneumatique de l'invention, ou encore par un écart d'environ 50 secondes sur une course de 40km, en roulant à 50km/h.

Avec le pneumatique 5 de l'invention, l'écoulement E décroche lorsque l'angle d'incidence i atteint la valeur de décrochage i4, qui est de l'ordre de 18°, alors que le pneumatique 101 de l'art antérieur décroche à environ 14°. Ceci est avantageux car le décrochage entraine une augmentation brusque de la trainée Fd et de l'effort latéral Fℓ, ce qui pénalise les performances du cycliste et perturbe le pilotage. Grâce à l'action conjuguée des zones lisses Z1 et Z3 et de la zone rugueuse Z2, le décrochage est limité, l'écoulement E va donc décrocher moins souvent.

Les aspérités 74 et 76 génèrent des micro-perturbations de l'écoulement E à proximité de la zone où l'écoulement a tendance à décrocher. Ces micro-perturbations permettent à l'écoulement E de rester collé le long de la surface extérieure S7 du pneumatique 5, ce qui a pour effet de réduire la trainée E, en particulier lorsque l'angle d'incidence i augmente.

L'allure des courbes C1 et C2 est différente : au moment du décrochage, la trainée Fd du pneumatique de la roue 1 de l'art antérieur augmente de manière très brusque, tandis que la trainée Fd du pneumatique 5 de l'invention augmente de manière beaucoup plus progressive. Ainsi, le pneumatique 5 de l'invention est moins sensible aux variations de l'angle d'incidence i, ce qui facilite le pilotage, notamment dans des conditions ventées.

Le pneumatique 5 décrit plus haut est un pneumatique de type boyau ou tubulaire. Bien entendu, on peut mettre en oeuvre tous les enseignements de l'invention pour un pneumatique de type ouvert, appelé également pneumatique à tringle.

D'autre part, les aspérités 74 et 76 décrites plus haut sont des picots pour la première partie 72b1 de la deuxième zone Z2 et des entailles pour la seconde partie 72b2. Ceci n'est pas limitatif. D'autre types d'aspérités, saillantes ou en creux, pourront être mises en oeuvre en combinaison avec les autres caractéristiques de l'invention, comme par exemple le pourcentage de la superficie des surfaces inférieures S74a et S76a dans la zone Z2, par rapport à la superficie totale de la deuxième zone Z2, et la présence de zones lisses connexes entre les aspérités 76 de la seconde partie 72b2 de la deuxième zone Z2.

Plus généralement, dans le cadre de l'invention, les différentes variantes peuvent être combinées entre elles.

## Revendications

1. Pneumatique (5) pour roue (1) de cycle, présentant une surface extérieure annulaire (S7) tournée à l'opposé d'un axe de rotation (Y2) de la roue (1) et comportant une première zone (Z1) comprenant une bande annulaire centrale lisse (72a) s'étendant de part et d'autre d'un sommet (S) du pneumatique (5) confondu avec un plan médian (P) du pneumatique (5),
**caractérisé en ce que**,
- dans une section radiale du pneumatique (5), un premier angle (a1) mesuré entre le plan médian (P) et l'un ou l'autre des bords annulaires (B1, B'1) de la première zone (Z1), est compris entre 10° et 20°,
- le pneumatique (5) comporte, en outre, une deuxième zone (Z2) comprenant deux bandes annulaires intermédiaires (72b, 72'b) s'étendant de part et d'autre de la première zone (Z1) et présentant chacune des aspérités (74, 76) définissant une surface supérieure (S74b, S76b) pouvant venir en contact avec le sol lors de l'utilisation du pneumatique (5), et une surface inférieure (S74a, S76a), la somme des surfaces inférieures (S74a, S76a) de la deuxième zone (Z2) étant supérieure ou égale à 40% de la surface totale de la deuxième zone (Z2), chaque bande intermédiaire (72b, 72'b) étant délimitée par un bord central annulaire (B21, B'21) adjacent à la première zone (Z1) et par un bord latéral annulaire et externe (B22, B'22) opposé au bord central annulaire (B21, B'21),
- dans une section radiale du pneumatique (5), un deuxième angle (α2), mesuré entre le plan médian (P) et le bord latéral annulaire et externe (B22, B'22) de chaque bande intermédiaire (72b, 72'b), est compris entre 50° et 80°,
- le pneumatique (5) comporte, en outre, une troisième zone (Z3) comprenant deux bandes annulaires latérales lisses (72c, 72'c) s'étendant chacune le long du bord latéral (B22, B'22) de l'une des bandes intermédiaire (72b, 72'b), la troisième zone (Z3, Z'3) étant délimitée par un bord central annulaire (B31, B'31) adjacent au bord latéral et externe (B22, B'22) de l'une des bandes intermédiaire (72b, 72'b) et par un bord latéral annulaire et externe (B32, B'32) opposé au bord central annulaire (B31, B'31) de la bande latérale (72c, 72'c),
- dans une section radiale du pneumatique (5), un troisième angle (α3), mesuré entre le plan médian (P) et l'un ou l'autre bord latéral et externe (B32, B'32) de la troisième zone (Z3, Z'3), est compris entre 80° et 100°, et
- une variation maximale locale (Δe2) de l'épaisseur (e) du pneumatique (5), au niveau du bord latéral et externe (B32, B'32) de chaque bande latérale lisse (72c, 72'c) de la troisième zone (23), est inférieure ou égale à 0, 2 mm.

2. Pneumatique (5) selon la revendication 1, **caractérisé en ce que** la deuxième zone (Z2) comporte des zones lisses connexes qui ont toutes une surface comprise entre 5 mm² et 50 mm², de préférence comprise entre 8 mm² et 30 mm².

3. Pneumatique (5) selon l'une des revendications précédentes, **caractérisé en ce qu'**une variation maximale globale d'épaisseur (Δe1) entre l'épaisseur maximale (emax) et l'épaisseur minimale (emin) du pneumatique (5) est comprise entre 1 mm et 2 mm.

4. Pneumatique (5) selon l'une des revendications précédentes, **caractérisé en ce que** la hauteur des aspérités (74, 76) de la deuxième zone (Z2) est supérieure à 0,2 mm, de préférence supérieure à 0,3 mm.

5. Pneumatique (5) selon l'une des revendications précédentes, **caractérisé en ce que** les aspérités (74, 76) de la deuxième zone (Z2) comprennent des picots (74) et/ou des entailles (76).

6. Pneumatique (5) selon l'une des revendications précédentes, **caractérisé en ce que** la deuxième zone (Z2) est divisée en des premières et secondes parties adjacentes (72b1, 72b2) réparties de manière alternée le long de la circonférence du pneumatique (5), **en ce que** les premières parties (72b1) comportent un premier type d'aspérités (74) et **en ce que** les secondes parties (72b2) comportent un deuxième type d'aspérités (76).

7. Pneumatique (5) selon les revendications 5 et 6 prises en combinaison, **caractérisé en ce que** les premières parties (72b1) de la deuxième zone (Z2) comportent des picots (74) et **en ce que** les secondes parties (72b2) de la deuxième zone (Z2) comportent des entailles (76).

8. Pneumatique (5) selon la revendication 5, **caractérisé en ce que** les picots (74) sont disposés selon des lignes parallèles qui, à l'état dégonflé et mis à plat du pneumatique (5), forment un angle (β1) compris entre 30° et 50° avec le sommet (S) du pneumatique (5).

9. Pneumatique (5) selon la revendication 5, **caractérisé en ce que**, à l'état dégonflé et mis à plat du pneumatique (5), les entailles (76) sont parallèles et forment un angle (β2) compris entre 30° et 50° avec le sommet (S) du pneumatique (5).

10. Pneumatique (5) selon l'une des revendications 1 à 9, **caractérisé en ce que** le diamètre du pneu est compris entre 20 et 25 mm.

11. Roue de cycle (1), **caractérisée en ce qu**'elle comprend un pneumatique (5) selon l'une des revendications précédentes.
